# EUROPEAN PATENT APPLICATION

(11) **EP 1 905 633 A1**
(43) Date of publication of application: **02.04.2008**
(21) Application number: 06781109.1
(22) Date of filing: 14.07.2006
(51) Int. Cl.: B60K 7/00, F16C 19/18, F16C 33/60, F16H 1/36, F16H 1/46, H02K 7/08, H02K 7/116

(54) **ELECTRIC WHEEL-DRIVE DEVICE**

(30) Priority: 19.07.2005 JP 2005208778
(71) Applicant: NTN Corporation, Osaka-shi, Osaka 550-0003 (JP)
(72) Inventor: SUZUKI, Minoru, Iwata-shi, Shizuoka 438-8510 (JP)
(74) Representative: Cohausz & Florack
(86) International application number: PCT/JP2006/314035
(87) International publication number: WO 2007/010843

(57) **Abstract**

An object of the present invention is to provide a motor-driven wheel driving apparatus which can solve the problems of the prior art and improve the durability of the wheel bearing, reduce the weight and size of the apparatus, and make it easy to assemble and disassemble the apparatus. According to the present invention since two the planetary reduction gear means are arranged within the outer member forming a part of the wheel bearing and at outboard side end of the inner member, it is possible to reduce the weight, size and unsprung weight of the apparatus. In addition it is possible to improve the durability of the apparatus with keeping a sufficient space of the wheel bearing and to suppress application of the offset load caused by the moment load to the planetary elements and input elements. Furthermore it is possible to suppress noise caused by engagement of the planetary elements and input elements. In addition since the wheel bearing, planetary reduction gear means and driving section can be easily separated from each other as each sub unit during service, it is unnecessary to exchange whole the apparatus and thus it is possible to contribute the resource reduction and maintenance costs.

## Description

### BACKGROUND OF THE INVENTION

### Field of the Invention

The present invention relates to a motor-driven wheel driving apparatus formed as a unit of a wheel bearing, reduction gear means and an electric motor intended to be used for a vehicle such as an electric vehicle, a golf cart or a fork lift truck.

### Description of Background Art

The motor-driven wheel driving apparatus has been proposed to improve the driving efficiency in case of driving a wheel by an electric motor and used for driving a wheel e.g. of an electric vehicle in which the wheel is directly driven by the electric motor. However, since such a motor-driven wheel driving apparatus requires a large torque for an electric motor, it is necessary to use a large scale motor of high power. This increases not only a manufacturing cost but a weight of vehicle and accordingly makes it difficult to ensure sufficient driving performance.

On the other hand, it has been also proposed a motor-driven wheel driving apparatus (an in-wheel motor) equipped with a reduction gear means in which an electric motor and a planetary reduction gear are arranged within a space inside a wheel and the rotational output of the electric motor is transmitted to the wheel via the planetary reduction gear means (see e.g. Japanese Patent Publication No. 3440082).

When adopting the planetary reduction gear means as a reduction gear means, its output shaft for transmitting the rotational output of the electric motor to the wheel via the planetary reduction gear means has to take out its output with coinciding its axial center to that of the motor shaft after once having been divided in the axial direction of the motor-driven wheel driving apparatus. Accordingly, there are caused problems in such an apparatus that its structure is difficult to assemble and the strength against inclination of wheel during running of vehicle is low since the supporting span of the output shaft must be reduced.

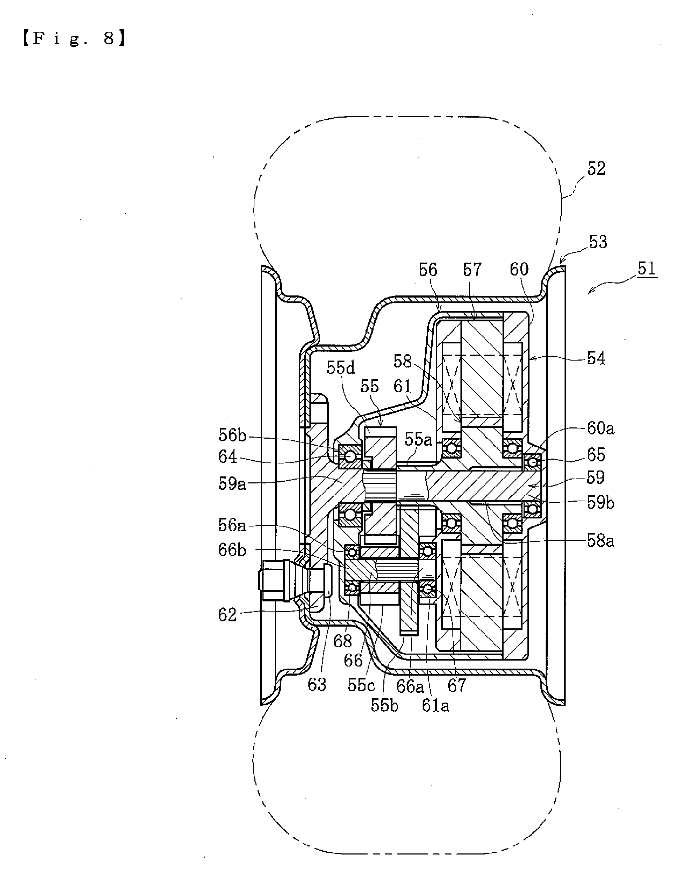

For solving these problems, it is known a motor-driven wheel driving apparatus as shown in Fig. 8. This motor-driven wheel driving apparatus 51 contains an electric motor 54 and reduction gear means 55 within the inside of a wheel 53 on which a tire 52 is mounted. The wheel 53 can be driven by a rotational output of the electric motor 54.

The electric motor 54 comprises a stator 57 secured to a side of a case 56 arranged inside the wheel 53, a rotor 58 arranged oppositely to the stator 57 within this, and an output shaft 59 for transmitting the rotational out of the rotor 58 to the wheel 53 via the reduction gear means 55. The stator 57 and the rotor 58 are secured to a side of the case 56 with being sandwiched by covers 60 and 61 and form the electric motor 54.

One end 59a of the output shaft 59 is integrally formed with a mounting flange 62 on which the wheel 53 is secured via hub bolts 63. The end 59a of the output shaft 59 is rotatably supported by a rolling bearing 64 within a shaft insert aperture 56b of the case 56, and the other end 59b is also rotatably supported by a rolling bearing 65 within a central recess 60a of the outer cover 60.

The reduction gear means 55 contained within the case 56 is formed by a plurality of gears 55a, 55b, 55c and 55d. A first gear 55a is arranged coaxially with the end of the rotor 58 and integrally formed therewith. Second and third gears 55b and 55c are secured on a same supporting shaft 66 and thus rotate simultaneously. The second gear 55b and the first gear 55a are meshed with each other. One end 66a of the supporting shaft 66 is rotatably supported by a rolling bearing 67 within a recess 61a of inner cover 61 and its other end 66b is also rotatably supported by a rolling bearing 68 within a recess 56a of the case 56. The force gear 55d is secured on the output shaft 59 and meshes with the third gear 55c.

According to such a structure, since the output shaft 59 of the electric motor 54 is rotatably supported at opposite ends of the case 56 with being passed through the aperture of center of rotation of the fourth gear 55d which is a final stage of the reduction gear means 55 and also through the shaft inserting aperture 58a of the rotor 58, the apparatus can be easily assembled by sequentially fitting the structural parts of the reduction gear means 55, the inner cover 61, the structural parts of the electric motor 54, and the outer cover 60 on the output shaft 59 using it as a reference part. In addition since the output shaft 59 is supported at substantially opposite ends of the motor-driven wheel driving apparatus 51, it is possible to ensure the supporting span of the output shaft 59 and thus to obtain a sufficient supporting strength against the inclination of wheel during running of vehicle (see Japanese Laid-open Patent Publication No. 81436/1995).

### Disclosure of the Invention

### Problems to be solved by the Invention

In such a motor-driven wheel driving apparatus, while the reduction gear means 55 can easily assemble various structural parts, the installation space for the rolling bearings 64 and 65 for supporting the output shaft 59 is limited since the electric motor 54 of high rotational output necessarily require a large mounting space. Accordingly, the loading capacity against the inclination of the wheel 53 during running of vehicle i.e. against the moment load becomes insufficient, and thus it has been required to improve the durability of the rolling bearings 64 and 65.

### SUMMARY OF THE INVENTION

It is therefore an object of the present invention to provide a motor-driven wheel driving apparatus which can solve the problems of the prior art and improve the durability of the wheel bearing, reduce the weight and size of the apparatus, and make it easy to assemble and disassemble the apparatus.

### Means for solving the problems

For achieving the object, there is provided, according to the present invention of claim 1, a motor-driven wheel driving apparatus comprising a driving section including a double row wheel bearing, planetary reduction gear means, an electric motor, and a cylindrical supporting member for supporting said electric motor; said wheel bearing comprising an outer member integrally formed with a wheel mounting flange on its outer circumference and formed with double row outer raceway surfaces, an inner member including a first inner ring member formed with one inner raceway surface arranged oppositely to one outer raceway surface and integrally formed with a cylindrical portion of smaller diameter axially extending from said one inner raceway surface, and a second inner ring member press fitted on said cylindrical portion of smaller diameter of said first inner ring member and formed with another inner raceway surfaces arranged oppositely to the other outer raceway surface and integrally formed with a cup-shaped stator housing extending radially outward from an inboard side end of said another inner raceway surface, and a plurality of rolling elements rollably arranged between said outer and inner raceway surfaces respectively of said outer and inner members; said planetary reduction gear means comprising an output element mounted on said outer member, input elements torque-transmittably arranged at an outboard side end of said supporting member, and a plurality of planetary elements rotatably supported on supporting pins secured on said first inner ring member and adapted to engage said input elements and said output element, said driving section comprising said electric motor including a stator section secured on an inner circumferential surface of said stator housing, and a rotor section secured on the outer circumferential surface of said supporting member with opposing to said stator section via a predetermined radial gap therebetween; and said supporting member being rotatably supported relative to shaft portions of said inner member via a pair of rolling bearings to transmit the rotation of said electric motor to said outer member so as to drive the wheel.

Also according to the present invention of claim 2, there is provided, a motor-driven wheel driving apparatus comprising a driving section including a double row wheel bearing, planetary reduction gear means, an electric motor, and a cylindrical supporting member for supporting said electric motor; said wheel bearing comprising an outer member integrally formed with a wheel mounting flange on its outer circumference and formed with double row outer raceway surfaces, an inner member including a first inner ring member formed with one inner raceway surface arranged oppositely to one outer raceway surface and integrally formed with a cylindrical portion of smaller diameter axially extending from said one inner raceway surface, and a second inner ring member press fitted on said cylindrical portion of smaller diameter of said first inner ring member and formed with another inner raceway surfaces arranged oppositely to the other outer raceway surface and integrally formed with a cup-shaped stator housing extending radially outward from an inboard side end of said another inner raceway surface (10a), and a plurality of rolling elements rollably arranged between said outer and inner raceway surfaces respectively of said outer and inner members; said planetary reduction gear means comprising a stationary element mounted on said first inner ring member, input elements torque-transmittably arranged at an outboard side end of said supporting member, a plurality of planetary elements engaging said input elements and said stationary element, and an output element supporting said planetary elements rotatably relative to a carrier; said driving section comprising said electric motor including a stator section secured on an inner circumferential surface of said stator housing, and a rotor section secured on the outer circumferential surface of said supporting member with opposing to said stator section via a predetermined radial gap therebetween; and said supporting member being rotatably supported relative to shaft portions of said inner member via a pair of rolling bearings and said carrier being connected to said outer member torque-transmittably thereto to transmit the rotation of said electric motor to said outer member so as to drive the wheel.

According to the present inventions of claims 1 and 2, since two the planetary reduction gear means are arranged within the outer member forming a part of the wheel bearing and at outboard side end of the inner member, it is possible to reduce the weight, size and unsprung weight of the apparatus. In addition it is possible to improve the durability of the apparatus with keeping a sufficient space of the wheel bearing and to suppress application of the offset load caused by the moment load to the planetary elements and input elements. Furthermore it is possible to suppress noise caused by engagement of the planetary elements and input elements. In addition since the wheel bearing, planetary reduction gear means and driving section can be easily separated from each other as each sub unit during service, it is unnecessary to exchange whole the apparatus and thus it is possible to contribute the resource reduction and maintenance costs.

It is preferable as defined in claim 3 that a plurality of carrier pins are secured on said input element equidistantly in its circumferential direction, a planetary reduction gear means is additionally provided, said planetary reduction gear means comprising a plurality of planetary elements rotatably supported on said carrier pins, a stationary element secured on the inner circumference of said first inner ring member, and an input element projected from the outboard side end of said supporting member, said planetary elements being engaged with said input element and stationary element, and the rotation of said electric motor being transmitted to said outer member via two planetary reduction gear means so as to drive said wheel. Such a structure makes it possible to obtain a remarkably large reduction ratio within a small space and thus to reduce the weight and size of the electric motor.

It is preferable as defined in claim 4 that a cup-shaped motor cover is fitted on the outer cylindrical portion of said stator housing and secured thereto by securing bolts, and said stator section is radially positioned and secured to said stator housing by arranging said securing bolts within semicircular axial grooves formed equidistantly in the outer circumferential direction of said stator section. Such a structure makes it possible to reduce the weight and size of the electric motor.

It is also preferable as defined in claim 5 that seals are arranged at either side of said bearing portions. Such a structure makes it possible to prevent contaminant in oil for lubricating the planetary reduction gear means from entering into the wheel bearing and planetary elements without provision of any filter and thus to improve durability of the bearings.

### Effect of the Invention

The motor-driven wheel driving apparatus of the present invention is structured so that it comprises a driving section including a double row wheel bearing, planetary reduction gear means, an electric motor, and a cylindrical supporting member for supporting said electric motor; said wheel bearing comprises an outer member integrally formed with a wheel mounting flange on its outer circumference and formed with double row outer raceway surfaces, an inner member including a first inner ring member formed with one inner raceway surface arranged oppositely to one outer raceway surface and integrally formed with a cylindrical portion of smaller diameter axially extending from said one inner raceway surface, and a second inner ring member press fitted on said cylindrical portion of smaller diameter of said first inner ring member and formed with another inner raceway surfaces arranged oppositely to the other outer raceway surface and integrally formed with a cup-shaped stator housing extending radially outward from an inboard side end of said another inner raceway surface, and a plurality of rolling elements rollably arranged between said outer and inner raceway surfaces respectively of said outer and inner members. Accordingly since two the planetary reduction gear means are arranged within the outer member forming a part of the wheel bearing and at outboard side end of the inner member, it is possible to reduce the weight, size and unsprung weight of the apparatus. In addition it is possible to improve the durability of the apparatus with keeping a sufficient space of the wheel bearing and to suppress application of the offset load caused by the moment load to the planetary elements and input elements. Furthermore it is possible to suppress noise caused by engagement of the planetary elements and input elements. In addition since the wheel bearing, planetary reduction gear means and driving section can be easily separated from each other as each sub unit during service, it is unnecessary to exchange whole the apparatus and thus it is possible to contribute the resource reduction and maintenance costs.

### Best mode for carrying out the Invention

Best mode for carrying out the present invention is a motor-driven wheel driving apparatus comprising a driving section including a double row wheel bearing, planetary reduction gear means, an electric motor, and a cylindrical supporting member for supporting said electric motor; said wheel bearing comprising an outer member integrally formed with a wheel mounting flange on its outer circumference and formed with double row outer raceway surfaces, an inner member including a first inner ring member formed with one inner raceway surface arranged oppositely to one outer raceway surface and integrally formed with a cylindrical portion of smaller diameter axially extending from said one inner raceway surface, and a second inner ring member press fitted on said cylindrical portion of smaller diameter of said first inner ring member and formed with another inner raceway surfaces arranged oppositely to the other outer raceway surface and integrally formed with a cup-shaped stator housing extending radially outward from an inboard side end of said another inner raceway surface, and a plurality of rolling elements rollably arranged between said outer and inner raceway surfaces respectively of said outer and inner members; said planetary reduction gear means comprising a second planetary reduction gear means including a second ring gear secured on the inner circumference of said first inner ring member, a first sun gear formed on a projected outboard side end of said supporting member, a plurality of second planetary gears each engaging said second ring gear and first sun gear, and a carrier for rotatably supporting said second planetary gears via carrier pins, and a first planetary reduction gear means including a first sun gear formed on said carrier, a first ring gear formed on the inner circumference of the outboard side end of said outer member, and a plurality of first planetary gears each engaging said first ring gear and first sun gear; said driving section comprising said electric motor including a stator section secured on an inner circumferential surface of said stator housing, and a rotor section secured on the outer circumferential surface of said supporting member with opposing to said stator section via a predetermined radial gap therebetween; and said supporting member being rotatably supported relative to shaft portions of said inner member via a pair of rolling bearings to transmit the rotation of said electric motor to said outer member via said first and second planetary reduction gear means so as to drive the wheel.

### BRIEF DESCRIPTION OF THE DRAWINGS

Additional advantages and features of the present invention will become apparent from the subsequent description and the appended claims, taken in conjunction with the accompanying drawings, wherein:
- Fig. 1: is a longitudinal-section view of a first embodiment of a motor-driven wheel driving apparatus of the present invention;
- Fig. 2: is a cross-sectional view taken along a line II-II of Fig. 1;
- Fig. 3: is a cross-sectional view taken along a line III-III of Fig. 1;
- Fig. 4: is a cross-sectional view taken along a line IV-IV of Fig. 1;
- Fig. 5: is a longitudinal-section view of a second embodiment of a motor-driven wheel driving apparatus of the present invention;
- Fig. 6: is a longitudinal-section view of a third embodiment of a motor-driven wheel driving apparatus of the present invention;
- Fig. 7: is a longitudinal-section view of a fourth embodiment of a motor-driven wheel driving apparatus of the present invention; and
- Fig. 8: is a longitudinal-section view of a motor-driven wheel driving apparatus of the prior art.

### DESCRIPTION OF THE PREFERRED EMBODIMENTS

### First embodiment

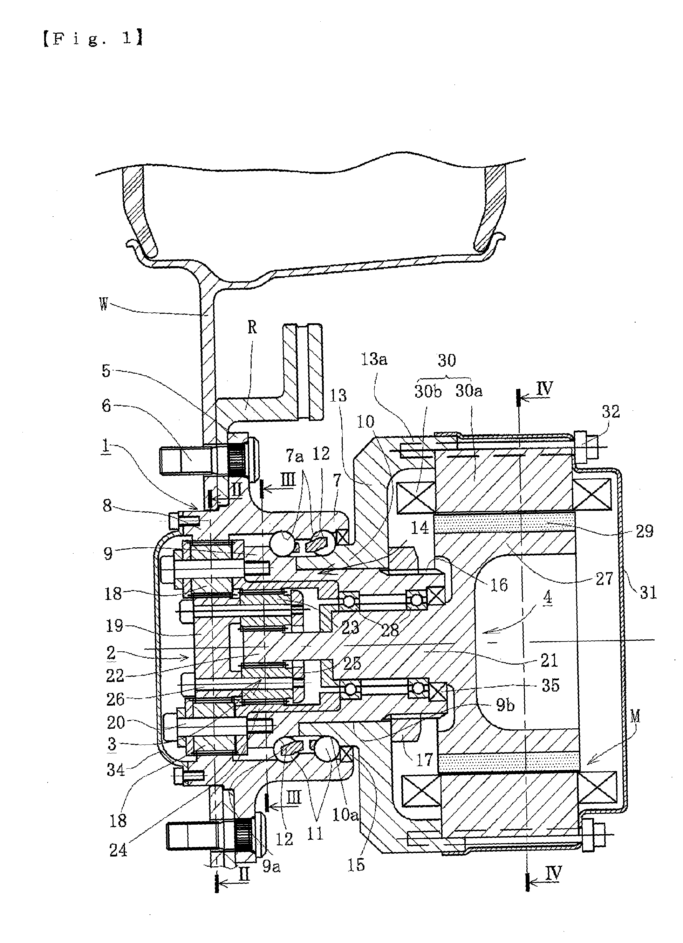

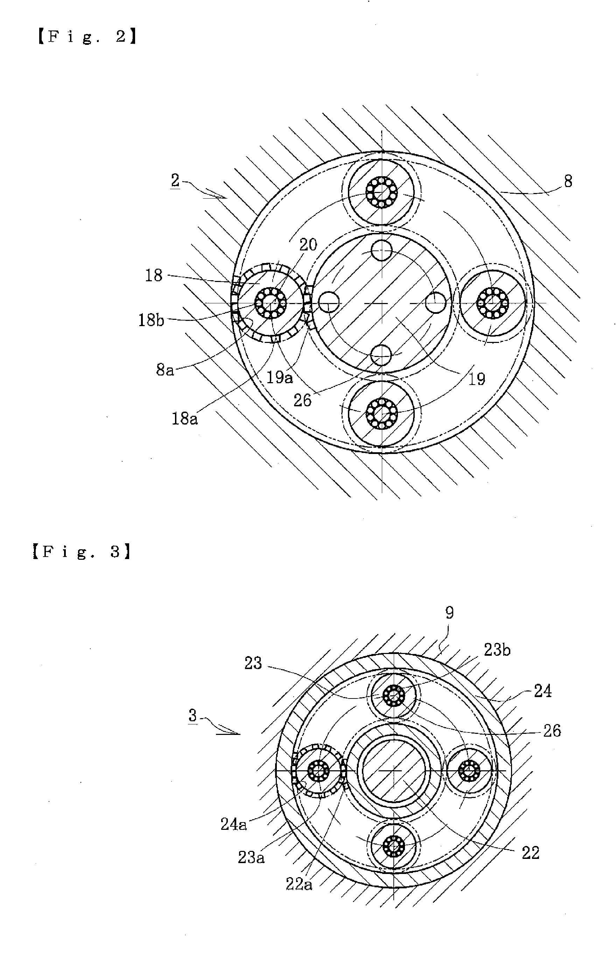

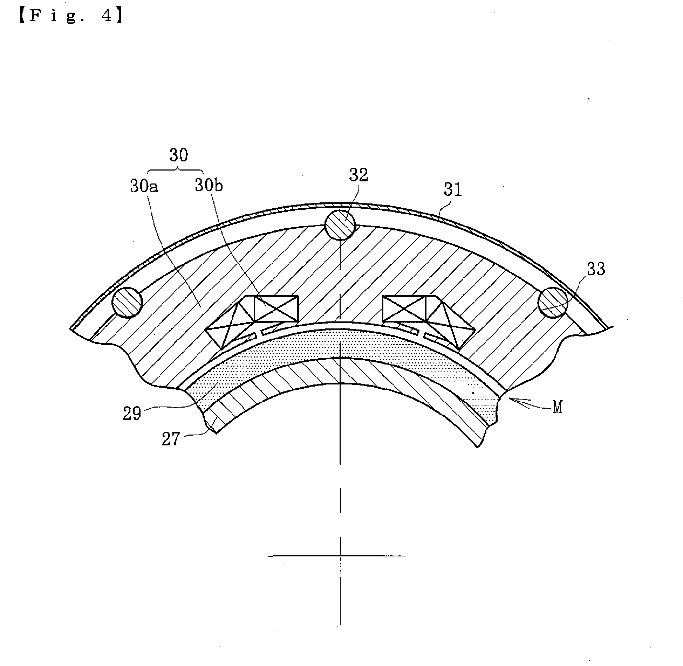

Preferred embodiments of the present invention will be described with reference to accompanied drawings. Fig. 1 is a longitudinal-section view of a first embodiment of a motor-driven wheel driving apparatus of the present invention, Fig. 2 is a cross-sectional view taken along a line II-II of Fig. 1, Fig. 3 is a cross-sectional view taken along a line III-III of Fig. 1, and Fig. 4 is a cross-sectional view taken along a line IV-IV of Fig. 1. In the description of the present invention, a side of a bearing positioned outward a vehicle when it is mounted on a vehicle is referred to as "outboard" side (the left side in a drawing), and a side inward a vehicle is referred to as "inboard" side (the right side in a drawing).

The motor-driven wheel driving apparatus of the present invention mainly comprises a wheel bearing 1, a first planetary reduction gear means 2 arranged radially inside of the wheel bearing 1, a second planetary reduction gear means 3 connected to the first planetary reduction gear means 2, and a driving section 4.

The wheel bearing 1 comprises an outer member 7 integrally formed with a wheel mounting flange 5 on its outer circumference for mounting thereon a wheel W and a brake rotor R and formed with double row outer raceway surfaces 7a, 7a on its inner circumference and a cylindrical ring gear 8 extending toward outboard side from the double row outer raceway surfaces 7a, 7a, a first inner ring member 9 formed with one inner raceway surface 9a arranged oppositely to one outer raceway surface 7a and integrally formed with a cylindrical portion of smaller diameter 9b axially extending from said one inner raceway surface 9a, and a second inner ring member 10 press fitted on said cylindrical portion of smaller diameter 9b of said first inner ring member 9 and formed with another inner raceway surfaces 10a arranged oppositely to the other outer raceway surface 7a and integrally formed with a cup-shaped stator housing 13 extending radially outward from an inboard side end of said another inner raceway surface 10a, double row rolling elements 11 rollably arranged between said outer and inner raceway surfaces and cages 12, 12 for holding said double row rolling elements 11 equidistantly in a circumferential direction. The stator section 30 described later is secured on an outer cylindrical portion 13a of said stator housing 13. Said first and second inner ring members 9, 10 form an inner member 14.

Wheel bolts 6 are arranged on the wheel mounting flange 5 of the outer member 7 equidistantly in its circumferential direction. The outer member 7 is made of medium carbon steel such as S53C including carbon of 0.40~0.80% by weight and the double row outer raceway surfaces 7a, 7a are hardened as having the surface hardness of 54~64 HRC. It is preferable to carry out the hardening using high frequency induction hardening which can easily achieve a localized heating and setting of depth of the hardening layer. Seal 15 is arranged at the inboard side end of the outer member 7 to prevent leakage of grease contained within the bearing apparatus as well as ingress of rain water or dusts.

The first inner ring member 9 is made of medium carbon steel such as S53C including carbon of 0.40~0.80% by weight and hardened as having a layer having surface hardness of 54~64 HRC from inner raceway surface 9a to the cylindrical portion of smaller diameter 9b. It is preferable to carry out the hardening using high frequency induction hardening which can easily achieve a localized heating and setting of depth of the hardening layer. A thread 16 is formed on the outer circumference at the end of the cylindrical portion of smaller diameter 9b and the second inner ring member 10 is secured axially immovable by fastening a nut 17 and thus the first and second inner ring members 9, 10 are separably secured.

The second inner ring member 10 is made of medium carbon steel such as S53C including carbon of 0.40~0.80% by weight and its inner raceway surface 10a is hardened as having a layer having surface hardness of 54~64 HRC. It is preferable to carry out the hardening using high frequency induction hardening which can easily achieve a localized heating and setting of depth of the hardening layer. Although it is herein illustrated an angular ball bearing using balls as rolling elements 11, for example a tapered roller bearing using tapered rollers may be also used.

As shown in Fig. 2 the first planetary reduction gear means 2 is formed as a united structure to the outer member 7 and comprises a first ring gear (output element) 8 formed with internal teeth 8a, four first planetary gears (planetary elements) 18 formed with external teeth 18a meshing the internal teeth 8a of the first ring gear 8 and moving in planetary motion along the inner circumference of the first ring gear 8, and a first sun gear (input element) 19 formed with external teeth 19a meshing the first planetary gear 18. The first planetary reduction gear means is a so-called "Star-type" planetary deduction gear means in which the first ring gear 8 rotates itself.

Each first planetary gear 18 is rotatably supported on a supporting pin 20 via a rolling bearing 18b. Each supporting pin 20 is threaded into the end face of the first inner ring member 9 through a second ring gear 24 equidistantly in the circumferential direction. Carrier pins 26 are arranged on the first sun gear 19 equidistantly in its circumferential direction (See Figs. 1 and 2).

On the other hand the second planetary reduction gear means 3 comprises a second sun gear (input element) 22 formed on the projected end of the outboard side of the spindle portion 21 forming the driving section 4 (see Fig. 1) and formed with external teeth 22a (see Fig. 3), four second planetary gears (planetary elements) formed with external teeth 23a meshing the external teeth 22a of the second sun gear 22 and moving in planetary motion along the outer circumference of the second sun gear 22, and a second ring gear 24 formed with internal teeth 24a meshing the external teeth 23a of the second planetary gear 23. Each second planetary gear 23 is supported on a carrier pin 26 secured on a carrier 25 (Fig. 1) via a rolling bearing 23b.

As shown in Fig. 1 the driving section 4 comprises a cylindrical supporting member 27 and an electric motor M. A spindle portion 21 is projected from the supporting member 27 at its center and a pair of rolling bearing 28, 28 are arranged between the spindle portion 21 and the first inner ring member 9. The supporting member 27 is rotatably supported on the inner member 14 (i.e. first and second inner ring members 9, 10) via the rolling bearings 28,28.

A rotor section 29 comprising a plurality of permanent magnets is secured on the outer circumference of the supporting member 27. On the other hand a stator section 30 is arranged oppositely to the rotor section 29 via a predetermined radial gap (air gap). The stator section 30 comprises a stator iron core 30a and a stator coil 30b wound on the iron core 30b. The rotor section 29 and the stator section 30 form the electric motor M.

A cup-shaped motor cover 31 is mounted on a cylindrical end of the stator housing 13 of the second inner ring member 10 and secured thereto by securing bolts 32. Each securing bolt 32 as shown in Fig. 4 engages in a semi-circular axial groove 33 equidistantly arranged along outer circumference of the stator iron core 30a so as to position the stator section 30 in a radial direction. Such a structure makes it possible to reduce the weight and size of the electric motor M.

If energizing the electric motor M, the supporting member 27 on which the rotor section 29 is secured is rotated. The rotation of the supporting member 27 causes planetary motion of the second planetary gears 23 and then is transmitted to the first sun gear 19 via carrier pins 26 after reduction. Then the rotation of the first sun gear 19 is transmitted to the first ring gear 8 via the first planetary gear 18 and to the outer member 7 after further reduction.

The reduction ratio of the first and second planetary reduction gear means 2, 3 can be appropriately changed by changing the number of tooth of the first and second planetary gears 18, 23 and a ratio of the number of gear tooth of the first and second ring gears 8, 24. The total reduction ratio can be determined by a product of the reduction ratio "m" of the first planetary reduction gear means 2 and the reduction ratio "n" of the second planetary reduction gear means 3, that is "m×n". Accordingly a remarkably large reduction ration can be obtained within a small space and the weight and size of the electric motor M can be substantially reduced.

According to the first embodiment of the present invention since the first and second planetary reduction gear means 2, 3 are arranged within an opening of the outboard side of the outer member 7 forming the wheel bearing 1, it is possible to obtain a sufficient space for the bearing section and to achieve easy assembly of the bearing section. In addition since the first and second planetary reduction gear means 2, 3 can uniformly support the moment load using their double row wheel bearing 1, it is possible to suppress application of the offset load to the first and second planetary gears 18, 23 and the first and second sun gears 19, 22. In addition since the electric motor M is separably united to the second inner ring member 10 forming the inner member 14 via the stator housing 13, it is possible to reduce the axial size of the apparatus. Furthermore since the wheel bearing 1, first and second planetary reduction gear means 2, 3, and the driving section 4 can be easily separated and exchanged as each sub unit it is unnecessary to exchange whole the apparatus. This contributes to the resource saving and reduction of the maintenance costs.

Opened ends of the wheel bearing 1 are closed by a cup-shaped cover 34 secured on the outboard side end of the outer member 7 and a seal 35 arranged at the inboard side end of the inner member (an end of the cylindrical portion of smaller diameter 9b of the first inner ring member 9). This makes it possible to use same lubricating oil for lubricating all the wheel bearing 1, the first and second planetary reduction gear means 2, 3 and the pair of rolling bearing 28, 28 for supporting the supporting member 27. It is also possible to separately lubricate the first and second planetary reduction gear means 2, 3 and the wheel bearing 1 and the pair of rolling bearings 28, 28 by grease lubricating only the bearings 1, 28, 28 with arranging seals (not shown) at both ends of these bearings 1, 28, 28 and by oil lubricating only the first and second planetary reduction gear means 2, 3. This makes it possible to prevent ingress of contaminants mingled with the lubricating oil into the first and second planetary reduction gear means 2, 3 and thus to improve the durability of the bearings.

Although it is shown in the illustrated embodiment that the first and second reduction means 2, 3 are gear reduction means it will be appreciated to those skilled in the art that the first and second reduction means 2, 3 may be friction reduction means (traction drive). This friction drive can substantially reduce noise and vibration generated during power transmission.

### Second embodiment

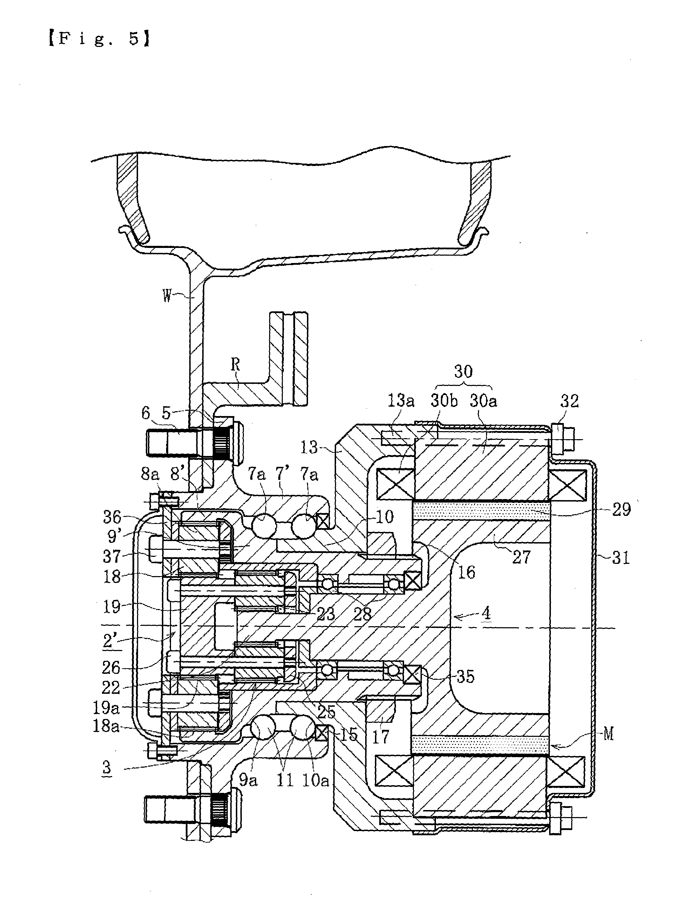

Fig. 5 is a longitudinal-section view of a second embodiment of a motor-driven wheel driving apparatus of the present invention. Since difference of this embodiment from the first embodiment only resides in the structure of the planetary reduction gear means, more particularly the first planetary reduction gear, same numerals are used as those used in the first embodiment for designating the same structural elements and detail description of them will be omitted.

A first planetary reduction gear means 2' comprises a first ring gear (output element) 8' formed integrally with a first inner ring member 9' and with internal teeth 8a, four first planetary gears (planetary elements) 18 moving in the planetary motion along the inner circumference of the first ring gear 8', and the first sun gear (input element) 19 formed with external teeth 19a meshing the first planetary gears 18. The first planetary gears 18 are rotatably supported on the carrier pins 37 secured on the carrier 36 secured on the outer member 7'.

If energizing the electric motor M, the supporting member 27 on which the rotor section 29 is secured is rotated. The rotation of the supporting member 27 causes planetary motion of the second planetary gears 23 and then is transmitted to the first sun gear 19 via carrier pins 26 after reduction (first stage). Then the rotation of the first sun gear 19 is transmitted to the carrier 36 via the first planetary gear 18 meshing the first ring gear 8' after further reduction and finally transmitted to the outer member 7'.

### Third embodiment

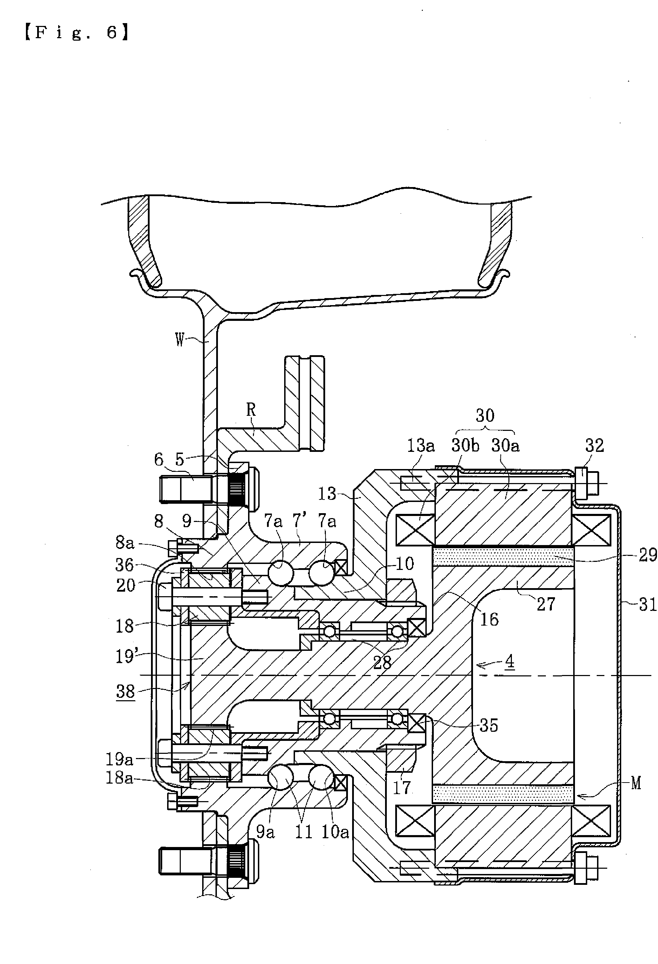

Fig. 6 is a longitudinal-section view of a third embodiment of a motor-driven wheel driving apparatus of the present invention. This third embodiment is modification of the first embodiment and comprises one stage planetary reduction gear means. Thus same numerals are used herein as those used in the previous embodiments for designating the same structural elements.

The planetary reduction gear means of this motor-driven wheel driving apparatus is basically structured only one stage planetary reduction gear means 2 with the second planetary reduction gear 3 in the first embodiment (Fig. 1) being omitted. This planetary reduction gear means 38 comprises the first ring gear (output element) 8 formed integrally with the outer member 7 and with internal teeth 8a, four first planetary gears (planetary elements) 18 moving in the planetary motion along the inner circumference of the first ring gear 8, and a sun gear (input element) 19' formed with external teeth 19a meshing the first planetary gears 18. The sun gear 19' is formed integrally with the spindle portion 21.

If energizing the electric motor M, the supporting member 27 on which the rotor section 29 is secured is rotated. The rotation of the supporting member 27 causes rotation of the sun gear 19' via the spindle portion 21 and the rotation of the sun gear 19' is then transmitted to the first ring gear 8 via the first planetary gears 18 finally transmitted to the outer member 7 after reduction.

### Fourth embodiment

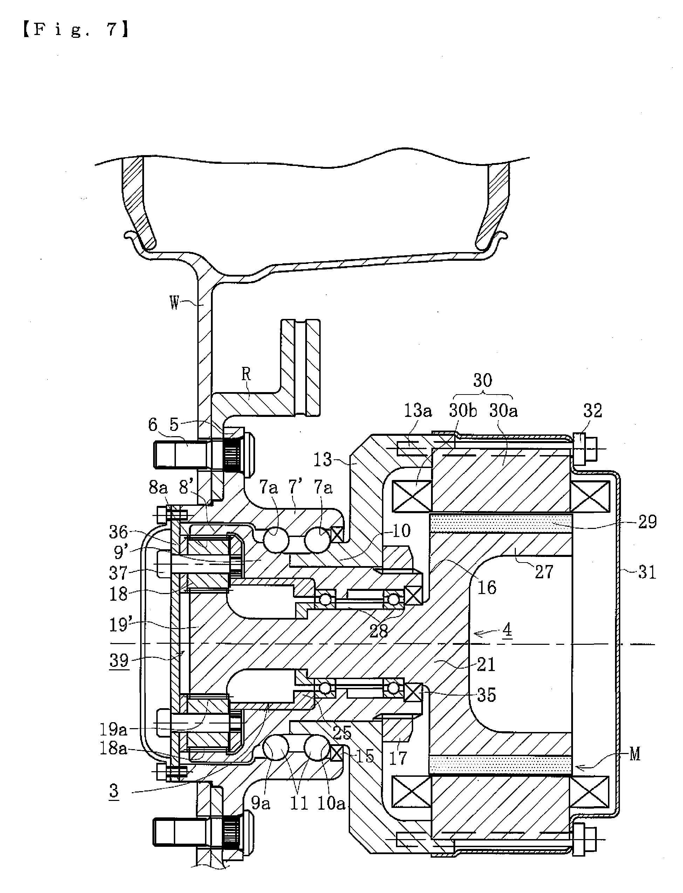

Fig. 7 is a longitudinal-section view of a fourth embodiment of a motor-driven wheel driving apparatus of the present invention. This fourth embodiment is modification of the second embodiment and comprises one stage planetary reduction gear means. Thus same numerals are used herein as those used in the previous embodiments for designating the same structural elements.

The planetary reduction gear means of this motor-driven wheel driving apparatus is basically structured only one stage planetary reduction gear means 2' with the second planetary reduction gear 3 in the first embodiment 3 of the second embodiment (Fig. 5) being omitted. This planetary reduction gear means 39 comprises the first ring gear (output element) 8' formed integrally with the first inner ring member 9' and with internal teeth 8a, four first planetary gears (planetary elements) 18 formed with external teeth 18 meshing the internal teeth 8a of the first ring gear 8' and adapted to move in the planetary motion along the inner circumference of the first ring gear 8', and the sun gear (input element) 19' formed with external teeth 19a meshing the first planetary gears 18. The sun gear 19' is formed integrally with the spindle portion 21.

If energizing the electric motor M, the supporting member 27 on which the rotor section 29 is secured is rotated. The rotation of the supporting member 27 causes rotation of the sun gear 19' via the spindle portion 21 and the rotation of the sun gear 19' is then transmitted to the carrier 36 via the first planetary gears 18 after reduction and then finally transmitted to the outer member 7'.

### Applicability to industry

The motor-driven wheel driving apparatus of the present invention can be applied to various kinds of vehicles such as 4-wheeled vehicles such as a fuel cell car and an electric car etc., motorcycles, golf carts, 3 or 4 wheeled carts for aged or physically handicapped persons, handy carts used in construction or transport fields and other motor-driven wheel driving apparatus used in electrically powered vehicles.

The present invention has been described with reference to the preferred embodiment. Obviously, modifications and alternations will occur to those of ordinary skill in the art upon reading and understanding the preceding detailed description. It is intended that the present invention be construed as including all such alternations and modifications insofar as they come within the scope of the appended claims or the equivalents thereof.

## Claims

1. A motor-driven wheel driving apparatus comprising:
a driving section (4) including a double row wheel bearing (1), planetary reduction gear means (2, 3), an electric motor (M), and a cylindrical supporting member (27) for supporting said electric motor (M);
said wheel bearing (1) comprising:
an outer member (7) integrally formed with a wheel mounting flange (5) on its outer circumference and formed with double row outer raceway surfaces (7a, 7a),
an inner member (14) including a first inner ring member (9) formed with one inner raceway surface (9a) arranged oppositely to one outer raceway surface (7a) and integrally formed with a cylindrical portion of smaller diameter (9b) axially extending from said one inner raceway surface (9a), and a second inner ring member (10) press fitted on said cylindrical portion of smaller diameter (9b) of said first inner ring member (9) and formed with another inner raceway surfaces (10a) arranged oppositely to the other outer raceway surface (7a) and integrally formed with a cup-shaped stator housing (13) extending radially outward from an inboard side end of said another inner raceway surface (10a), and
a plurality of rolling elements (11) rollably arranged between said outer and inner raceway surfaces (7a, 7a and 9a, 10a) respectively of said outer and inner members (7 and 14);
said planetary reduction gear means (2,3) comprising:
an output element (8) mounted on said outer member (7), input elements (19, 22) torque-transmittably arranged at an outboard side end of said supporting member (27), and
a plurality of planetary elements (18) rotatably supported on supporting pins (20) secured on said first inner ring member (9) and adapted to engage said input elements (19, 22) and said output element (8);
said driving section (4) comprising:
said electric motor (M) including a stator section (30) secured on an inner circumferential surface of said stator housing (13), and a rotor section (29) secured on the outer circumferential surface of said supporting member (27) with opposing to said stator section (30) via a predetermined radial gap therebetween; and
said supporting member (27) being rotatably supported relative to shaft portions of said inner member (14) via a pair of rolling bearings (28) to transmit the rotation of said electric motor (M) to said outer member (7) so as to drive the wheel (W).

2. A motor-driven wheel driving apparatus comprising:
a driving section (4) including a double row wheel bearing (1), planetary reduction gear means (2, 3), an electric motor (M), and a cylindrical supporting member (27) for supporting said electric motor (M);
said wheel bearing (1) comprising:
an outer member (7) integrally formed with a wheel mounting flange (5) on its outer circumference and formed with double row outer raceway surfaces (7a, 7a),
an inner member (14) including a first inner ring member (9) formed with one inner raceway surface (9a) arranged oppositely to one outer raceway surface (7a) and integrally formed with a cylindrical portion of smaller diameter (9b) axially extending from said one inner raceway surface (9a), and a second inner ring member (10) press fitted on said cylindrical portion of smaller diameter (9b) of said first inner ring member (9) and formed with another inner raceway surfaces (10a) arranged oppositely to the other outer raceway surface (7a) and integrally formed with a cup-shaped stator housing (13) extending radially outward from an inboard side end of said another inner raceway surface (10a), and
a plurality of rolling elements (11) rollably arranged between said outer and inner raceway surfaces (7a, 7a and 9a, 10a) respectively of said outer and inner members (7 and 14);
said planetary reduction gear means (2,3) comprising:
a stationary element (24) mounted on said first inner ring member (9),
input elements (22) torque-transmittably arranged at an outboard side end of said supporting member (27),
a plurality of planetary elements (23) engaging said input elements (22) and said stationary element (24), and
an output element (8) supporting said planetary elements (23) rotatably relative to a carrier (25);
said driving section (4) comprising:
said electric motor (M) including a stator section (30) secured on an inner circumferential surface of said stator housing (13), and a rotor section (29) secured on the outer circumferential surface of said supporting member (27) with opposing to said stator section (30) via a predetermined radial gap therebetween; and
said supporting member (27) being rotatably supported relative to shaft portions of said inner member (14) via a pair of rolling bearings (28) and said carrier (25) being connected to said outer member (7) torque-transmittably thereto to transmit the rotation of said electric motor (M) to said outer member (7) so as to drive the wheel (W).

3. A motor-driven wheel driving apparatus of claim 1 or 2 wherein a plurality of carrier pins (26) are secured on said input element (19) equidistantly in its circumferential direction, a planetary reduction gear means (3) is additionally provided, said planetary reduction gear means (3) comprising a plurality of planetary elements (23) rotatably supported on said carrier pins (26), a stationary element (24) secured on the inner circumference of said first inner ring member (9), and an input element (22) projected from the outboard side end of said supporting member (27), said planetary elements (23) being engaged with said input element (22) and stationary element (24), and the rotation of said electric motor (M) being transmitted to said outer member (7) via two planetary reduction gear means (2, 3) so as to drive said wheel (W).

4. A motor-driven wheel driving apparatus of any one of claims 1 through 3 wherein a cup-shaped motor cover (31) is fitted on the outer cylindrical portion of said stator housing (13) and secured thereto by securing bolts (32), and said stator section (30) is radially positioned and secured to said stator housing (13) by arranging said securing bolts (32) within semicircular axial grooves (33) formed equidistantly in the outer circumferential direction of said stator section (30).

5. A motor-driven wheel driving apparatus of any one of claims 1 through 4 wherein seals (15, 34, 35) are arranged at either side of said bearing portions (7a, 9a, 10a, 11, 12, 28).
